# EUROPEAN PATENT APPLICATION

(11) **EP 4 786 839 A1**
(43) Date of publication of application: **05.08.2026**
(21) Application number: 24871323.2
(22) Date of filing: 28.03.2024
(51) Int. Cl.: F16L 55/172, F16L 55/18

(54) **WATER LEAKAGE REPAIR METAL FITTING AND WATER LEAKAGE REPAIR METHOD**

(30) Priority: 28.09.2023 JP 2023167563
(71) Applicant: Yokohama City, Yokohama-shi, Kanagawa 231-0005 (JP); Taisei Kiko Co., Ltd., Osaka-shi, Osaka 530-0001 (JP)
(72) Inventor: KAGAMI,Shingo, Yokohama-shi, Kanagawa 231-0005 (JP); OKADA,Hiroaki, Yokohama-shi, Kanagawa 231-0005 (JP); KITAMURA,Kouto, Yokohama-shi, Kanagawa 231-0005 (JP); MORI,Mitsuhiro, Osaka-shi, Osaka 530-0001 (JP)
(74) Representative: Parker, Andrew James
(86) International application number: PCT/JP2024/012578
(87) International publication number: WO 2025/069507

(57) **Abstract**

A water leak repair fitting have a first unit (1) that has a plurality of metal bands (3) provided at intervals in a pipe circumferential direction of the fluid pipe (K), and a fastening mechanism (4) that fastens end parts of the plurality of metal bands (3) in the pipe circumferential direction to each other; a second unit (2) is located adjacent to the first unit (1), and has a plurality of metal bands (3) provided at intervals in a pipe circumferential direction of the fluid pipe (K), and a fastening mechanism (4) that fastens end parts of the plurality of metal bands (3) in the pipe circumferential direction to each other; and a first water stop sheet (6) formed of elastic body and extends from the first metal band (3') of the first unit (1) to the second metal band (3") of the second unit (2) in the pipe axial direction AD. A length L2 of the first water stop sheet (6) in the pipe circumferential direction is smaller than a length of the first metal band (3') and the second metal band (3") in the pipe circumferential direction. The first water stop sheet (6) is pressed against an outer peripheral surface of the fluid pipe (K) by the first metal band (3') and the second metal band (3").

## Description

### TECHNICAL FIELD

The present invention relates to a water leak repair technology for a fluid pipe such as a water pipe.

### BACKGROUND ART

A fluid pipe (such as a water pipe) installed outdoors, such as a water pipe bridge, may have a water leak due to corrosion of the pipe. Devices for repairing fluid pipes under a condition where a water leak occurs are known (see, for example, Patent Document 1).

A water leak repair fitting disclosed in Patent Document 1 includes a metal band wound around a water leak portion of a fluid pipe, a fastening mechanism for fastening the metal band, and a rubber sheet disposed on an inner peripheral side of the metal band.

### PRIOR ART DOCUMENTS

### PATENT DOCUMENT

Patent Document 1: JP 2023 - 013 633 A

### SUMMARY OF THE INVENTION

### PROBLEMS TO BE SOLVED BY THE INVENTION

The water leak repair fitting disclosed in Patent Document 1 is suitable for repairing pinhole-like water leak portions, but it may be difficult to cope with leaks from cracks extending in the pipe axial direction.

The present invention provides a water leak repair technology capable of coping with leaks from cracks extending in the pipe axial direction.

### MEANS FOR SOLVING THE PROBLEMS

According of the present invention, there is provided a water leak repair fitting attached to a water leak portion of a fluid pipe, the water leak repair fitting comprising: a first unit that has a plurality of metal bands provided at intervals in a pipe circumferential direction of the fluid pipe, and a fastening mechanism that fastens end parts of the plurality of metal bands in the pipe circumferential direction to each other; a second unit is located adjacent to the first unit, and has a plurality of metal bands provided at intervals in a pipe circumferential direction of the fluid pipe, and a fastening mechanism that fastens end parts of the plurality of metal bands in the pipe circumferential direction to each other; and a first water stop sheet formed of elastic body and extends from a first metal band of the first unit to a second metal band of the second unit in a pipe axial direction, wherein a length of the first water stop sheet in the pipe circumferential direction is smaller than a length of the first metal band and the second metal band in the pipe circumferential direction, and the first water stop sheet is pressed against an outer peripheral surface of the fluid pipe by the first metal band and the second metal band.

### BRIEF DESCRIPTION OF THE DRAWINGS

FIG. 1 is a side view illustrating a water leak repair fitting attached to a fluid pipe according to a first embodiment of the present invention.
FIG. 2 is a cross-sectional view taken along line II-II in FIG. 1.
FIG. 3 is a side view illustrating a metal band before being attached to the fluid pipe and a second water stop sheet integrated with the metal band.
FIG. 4 is a plan view illustrating the metal band.
FIG. 5 is a side view illustrating the metal band.
FIG. 6 is a diagram of the second water stop sheet as viewed from an inner peripheral surface side (inner side in a pipe radial direction).
FIG. 7 is a cross-sectional view taken along line V-V in FIG. 6.
FIG. 8 is a diagram of the first water stop sheet as viewed from an inner peripheral surface side (inner side in a pipe radial direction).
FIG. 9 is a cross-sectional view taken along line IX-IX in FIG. 8.
FIG. 10 is a cross-sectional view taken along line X-X in FIG. 8.
FIG. 11 is a diagram illustrating the process of a water leak repair method using a water leak repair fitting.

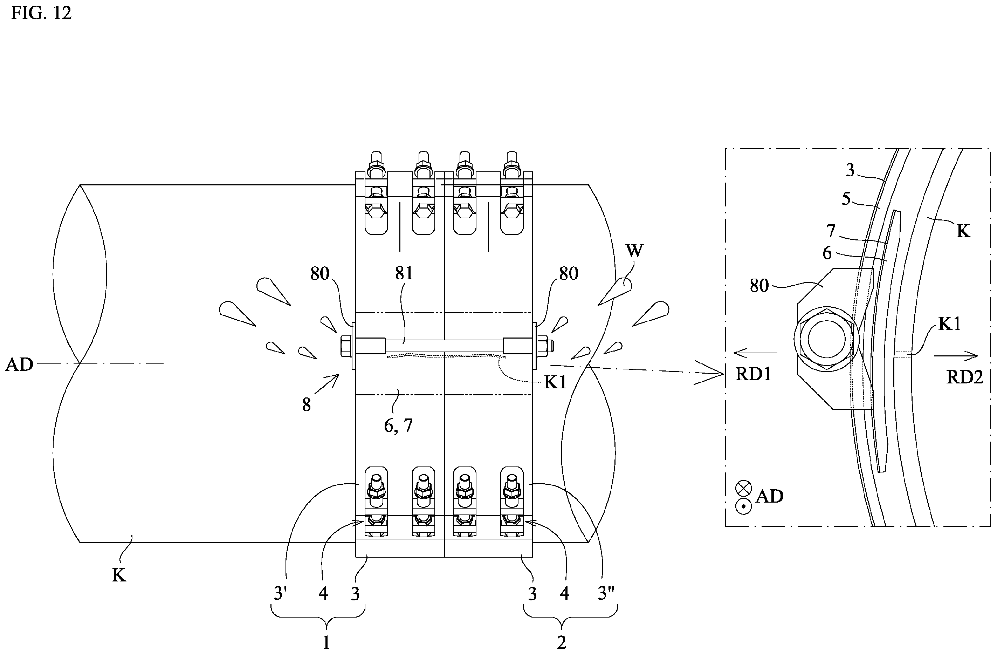

FIG. 12 is a diagram illustrating the process of a water leak repair method using a water leak repair fitting.
FIG. 13 is a cross-sectional view taken along line XIII- XIII in FIG. 1.
FIG. 14 is a diagram illustrating the first water-stopping sheet of the second embodiment and corresponding to FIG. 9.
FIG. 15 is a cross-sectional view along the pipe axial direction and pipe radial direction, illustrating the first water stop sheet and the second water stop sheet.
FIG. 16 is a cross-sectional view taken along line XVI- XVI in FIG. 15.
FIG. 17 is a plan view of the first water stop sheet and the first metal plate bonded to the outer peripheral surface of the first water stop sheet when viewed in a direction parallel to the pipe radial direction.
FIG. 18 is a cross-sectional view taken along line XVIII- XVIII in FIG. 17.

### MODE FOR CARRYING OUT THE INVENTION

### First Embodiment

A water leak repair fitting and a water leak repair method according to a first embodiment of the present invention will be described below with reference to the drawings.

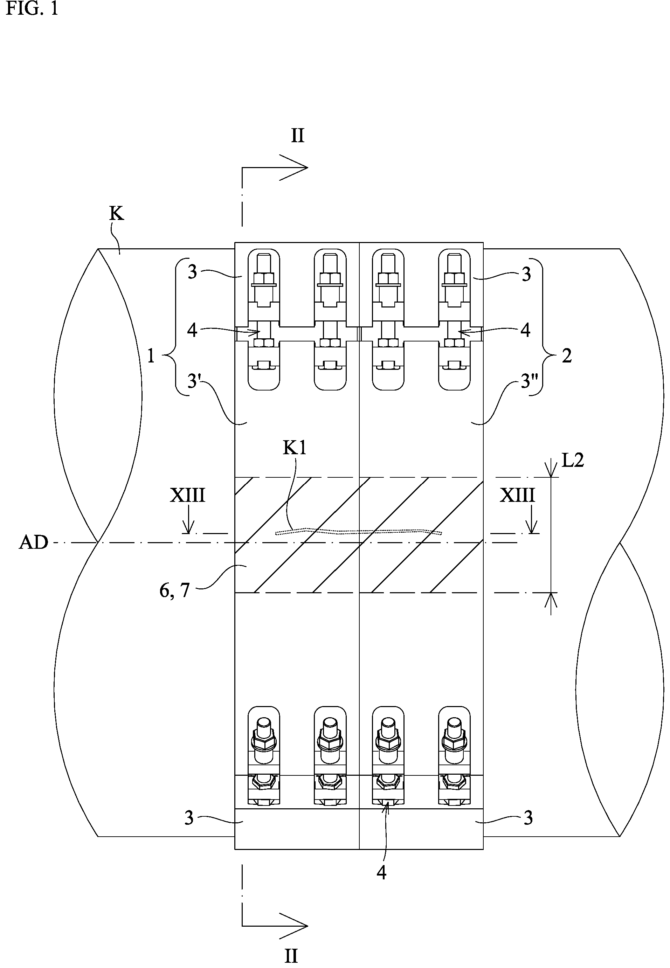

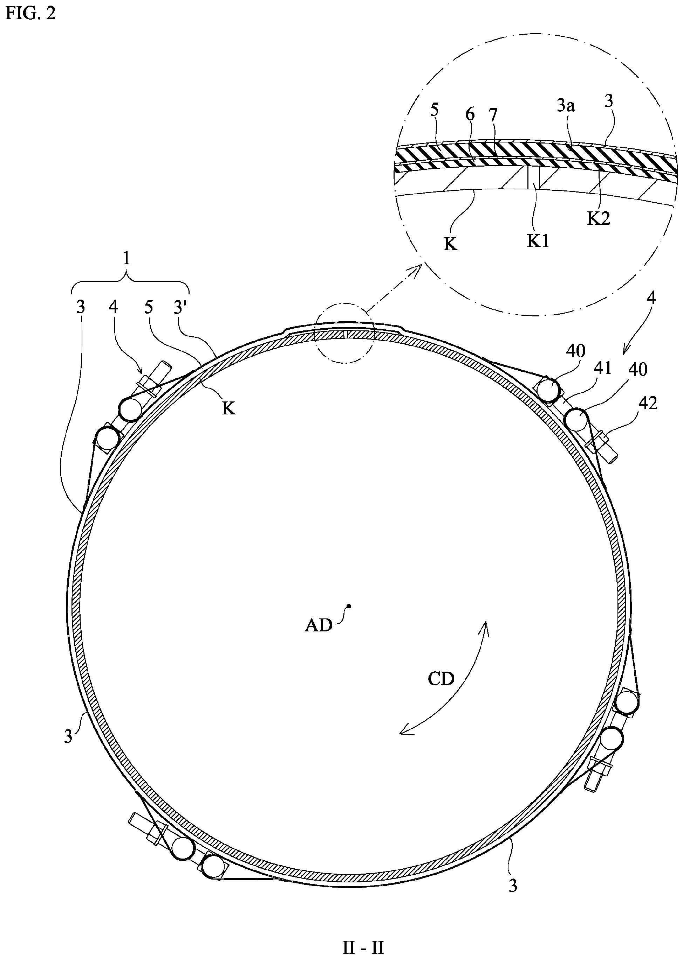

As illustrated in FIGS. 1 and 2, a water leak repair fitting is attached to a water leak portion K1 of a fluid pipe K such as a water pipe. The water leak repair fitting of the first embodiment stops water leak portions K1 caused by cracks extending in the pipe axial direction AD in fluid pipe K. Such a crack may occur at a weld extending in the pipe axial direction AD in a fluid pipe K. The water leak repair fitting includes a first unit 1, a second unit 2 arranged adjacent to the first unit 1, and a first water stop sheet 6 for sealing the water leak portion K1. The first unit 1 has a plurality of metal bands 3, a fastening mechanism 4, and a second water stop sheet 5. The second unit 2 has a plurality of metal bands 3, a fastening mechanism 4, and a second water stop sheet 5. Although the first unit 1 and the second unit 2 are positioned at different positions with respect to the fluid pipe K, the metal bands 3, fastening mechanism 4, and second water stop sheet 5 constituting each unit have the same structure.

The term "fitting" in the water leak repair fitting means that the material of the plurality of metal bands is metal, and does not mean to limit the material of other members, for example, the water stop sheet, to metal.

### Metal bands 3

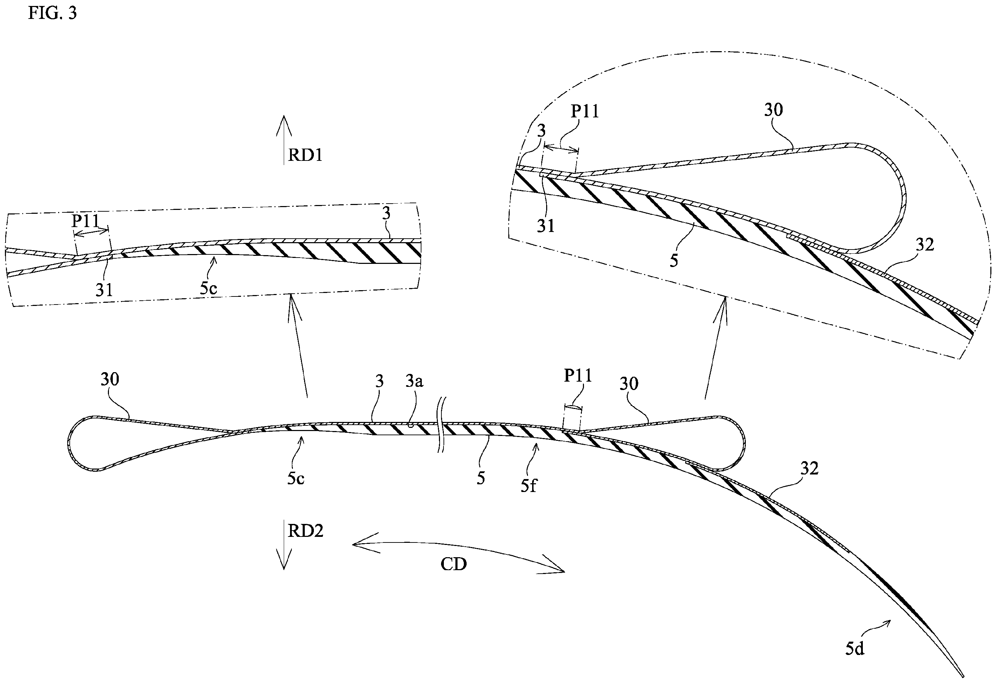

The plurality of metal bands 3 are provided at intervals in the pipe circumferential direction CD of the fluid pipe K. As illustrated in FIGS. 3, 4, and 5, the metal band 3 has annular portions 30 at both end parts in the pipe circumferential direction CD. The annular portions 30 are formed by bending a sheet metal and welding tips 31 on both sides of the sheet metal in the pipe circumferential direction CD to the sheet metal. In the embodiment illustrated in the abovementioned drawings, the metal band 3 is arranged with the welded tips 31 of the sheet metal being directed to the inner side RD2 in the pipe radial direction. When the annular portions 30 are formed by bending the sheet metal, the welded sections of the tips 31 of the sheet metal are going to be lifted to the outer side RD1 in the pipe radial direction.

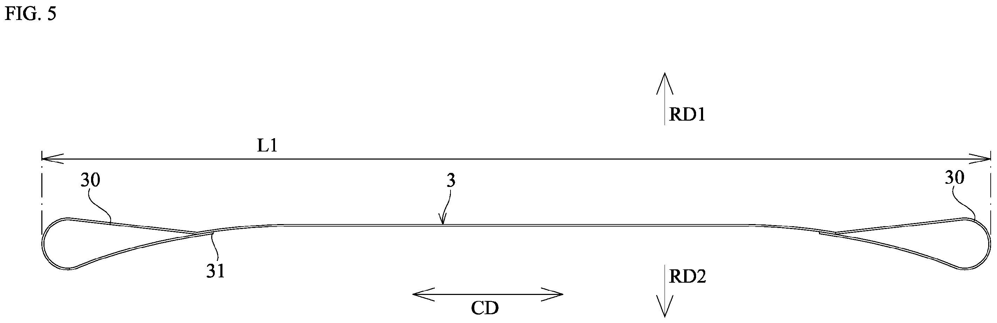

When the tips 31 of the sheet metal fixed by welding are located on the inner side RD2 in the pipe radial direction, the water stop rubber on the inner side RD2 in the pipe radial direction is easily pressed by thick portions of the tips 31 as compared with a case where the tips are located on the outer side RD1 in the pipe radial direction. As illustrated in FIG. 5, the annular portions 30 have a plurality of pairs of openings 30s through which a bolt 41 and a nut 42 are inserted. The openings 30s open to the outer side RD1 in the pipe radial direction and the outer side in the pipe circumferential direction. In the present embodiment, two pairs of openings 30s are formed, but the number of pairs can be appropriately changed according to the dimension of the metal band 3 in the pipe axial direction AD.

The metal band 3 is made of metal. In the present embodiment, SUS is used for the metal band 3. Although not particularly limited, the thickness of the sheet metal constituting the metal band 3 is preferably 1.0 mm or more and 1.5 mm or less when SUS is used. In the present embodiment, the thickness is 1.2 mm. If the thickness of the sheet metal is less than 1.0 mm, the metal band 3 extends when the fastening mechanism 4 is tightened to apply a tensile load to the metal band 3, so that the water stop sheet 5 cannot be appropriately compressed. When the thickness of the sheet metal exceeds 1.5 mm, it is difficult to manually bend the metal band 3, and thus, it is difficult to bend the metal band 3 into a shape conforming to the fluid pipe K.

### Fastening mechanism 4

The fastening mechanism 4 fastens end parts of the plurality of metal bands 3 in the pipe circumferential direction to each other. The fastening mechanism 4 includes a bolt 41 and a nut 42. As illustrated in FIG. 2, the fastening mechanism 4 includes the rotation shafts 40 that are inserted into the annular portions 30 and are rotatable in the annular portions 30, and a bolt 41 and a nut 42 that fasten the rotation shafts 40 to each other. The rotation shafts 40 are configured to be rotatable in the annular portions 30 of the metal band 3.

With this configuration, even if the distance between the annular portions 30 changes according to the mounting position of the metal band 3, or even if the metal bands 3 are used for various types of fluid pipes K that vary in diameter size and that have outer peripheral surfaces of any curvature, only a force parallel to a bolt axis can be applied to the bolt 41 and the nut 42 due to the rotation shafts 40 being rotatable, and thus, the metal bands 3 can uniformly press the second water stop sheets 5 over the entire circumference in the pipe circumferential direction CD.

### First water stop sheet 6

The first water stop sheet 6 is formed of an elastic body such as rubber. In FIG. 1, the first water stop sheet 6 and the first metal plate 7 described below are hidden by the metal band 3, so the first water stop sheet 6 and the first metal plate 7 are illustrated by hatching. As illustrated in FIG. 1, the first water stop sheet 6 extends in the pipe axial direction AD from the first metal band 3' included in the first unit 1 to the second metal band 3" included in the second unit 2. The first metal band 3' is the metal band 3 that presses against the first water stop sheet 6 of the plurality of metal bands 3 included in the first unit 1. The second metal band 3" is the metal band 3 that presses against the first water stop sheet 6 of the plurality of metal bands 3 included in the second unit 2. The first metal band 3' and the second metal band 3" are adjacent to each other in the pipe axial direction AD. The rubber hardness of the first water stop sheet 6 is preferably 50 degrees or more and 80 degrees or less. The rubber hardness is a hardness of a measurement method based on JIS K7312 and is measured under 23 °C using type C.

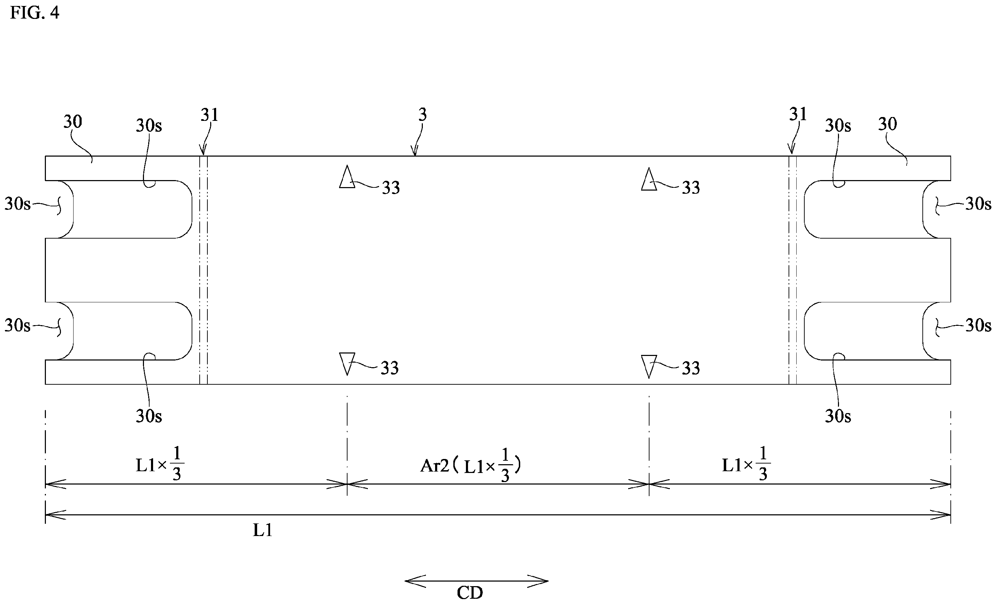

As illustrated in FIGS. 1, 4-5, and 8, a length L2 of the first water stop sheet 6 in the pipe circumferential direction is smaller than a length L1 along the pipe circumferential direction CD of the metal band 3, which is the first metal band 3' and the second metal band 3". As illustrated in FIG. 4, the metal bands 3 which are the first metal band 3' and the metal band 3", have an indication 33 designating a position at which the first water stop sheet 6 is to be disposed. In the first embodiment, the indication 33 is a triangular mark, indicating that the first water stop sheet 6 is to be disposed in the indication area Ar2, which is sandwiched between the plurality of indications 33. The indication area Ar2 is the middle area when the length L1 along the pipe circumferential direction CD of the metal band 3 is divided into three equal parts. Therefore, the indication 33 is not limited to a triangular mark, as long as the indication 33 indicates that the first water stop sheet 6 is to be disposed in all or part of the indication area Ar2. If the first water stop sheet 6 is out of the indication area Ar2, the pressure of the first water stop sheet 6 by the metal band 3 may not be sufficient to stop the water leak portion K1 properly.

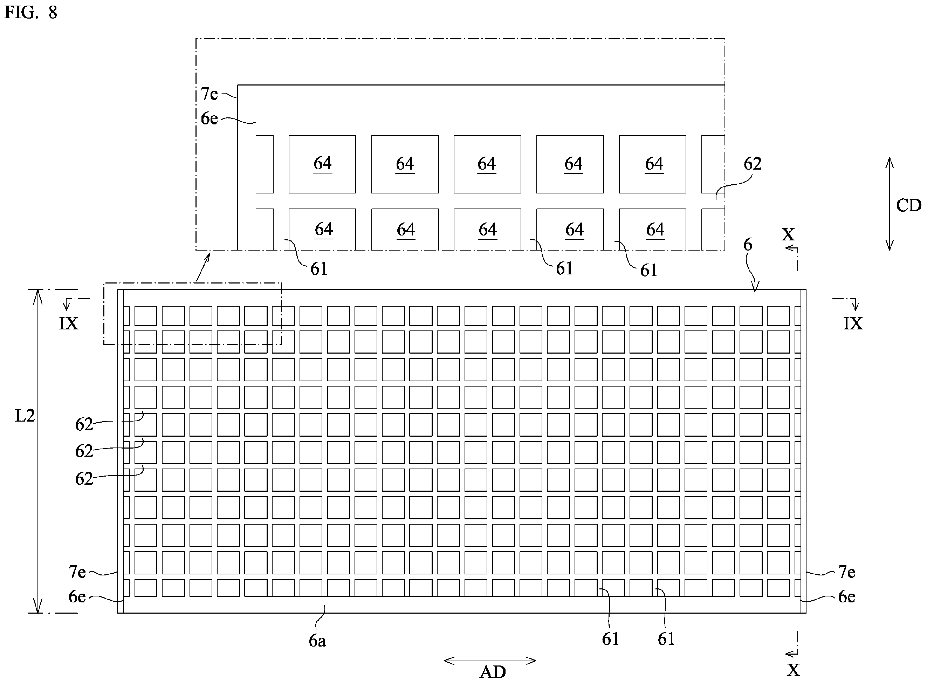

As illustrated in FIG. 8 to 10, an inner peripheral surface 6a of the first water stop sheet 6 has a plurality of first ribs 61 extending in a first direction (in the first embodiment, the pipe circumferential direction CD), a plurality of second ribs 62 extending in a second direction (in the first embodiment, the pipe axial direction AD) intersecting the first direction, and a plurality of first recesses 64. The first rib 61 and the second rib 62 protrude further to an inner side RD2 in the pipe radial direction from the bottom 64s of the first recess 64. The first recess 64 is formed by being enclosed by a plurality of first ribs 61 and a plurality of second ribs 62. The plurality of first ribs 61 and the plurality of second ribs 62 form a mesh. One cell constituting the mesh is one first recess 64. In the present embodiment, the shape of the first recess 64 as viewed from the inner side RD2 in the pipe radial direction is rectangular (square), and is a rectangular parallelepiped from a three-dimensional perspective, but is not limited thereto. For example, the first recess 64 may be rhombus, circular, or elliptical.

To resist water pressure, the width dimension of the first rib 61 and the second rib 62 is preferably 1 mm or more. In the first embodiment, the width dimension of the first rib 61 and the second rib 62 is 2.5 mm, but is not limited to this value.

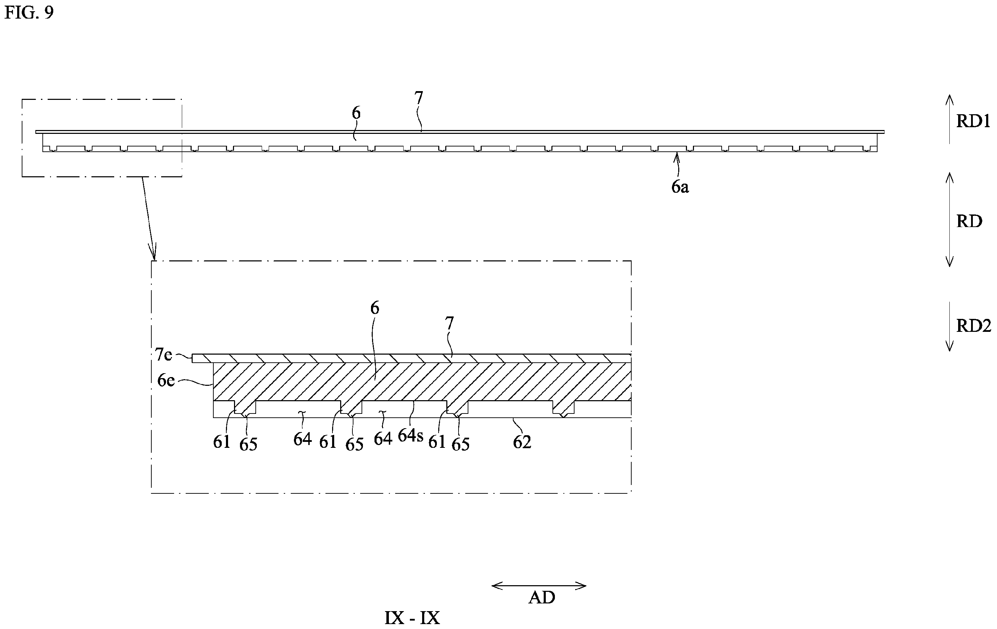

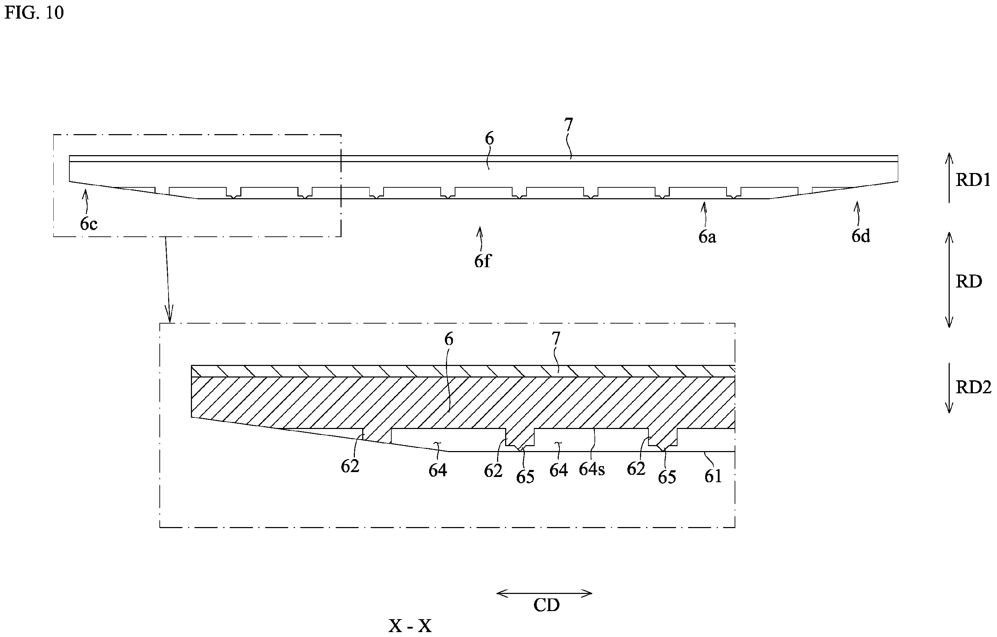

As illustrated in FIGS. 9 and 10, micro-protrusions 65 with a width and protruding height of 0.75 mm or less are formed on the inner peripheral surfaces of the first rib 61 and the second rib 62, but the micro-protrusions 65 can be omitted. Instead of micro-protrusions 65, it is possible to form micro-depressions with a width and depth of 0.75 mm or less. The micro-protrusions 65 or micro-depressions can absorb micro-convex shapes such as rust and corrosion on the pipe surface.

As illustrated in FIGS. 9 and 10, a first metal plate 7 is arranged on the outer peripheral surface 6b of the first water stop sheet 6. The first metal plate 7 covers the entire outer peripheral surface 6b of the first water stop sheet 6 and is bonded to the first water stop sheet 6. As a result, even if the first water stop sheet 6 is placed in the gap between the first metal band 3' and the second metal band 3" can properly press the first water stop sheet 6, even if the first water stop sheet 6 is placed in the gap between the first metal band 3' and the second metal band 3", and water stop in the water leak portion K1 can be stopped.

As illustrated in FIGS. 8 and 9, the outer end 6e of the first water stop sheet 6 in the pipe axial direction AD is located inward in the pipe axial direction AD than the outer end 7e of the first metal plate 7 in the pipe axial direction AD. This is because the first metal plate 7 can support the first water stop sheet 6 when the first water stop sheet 6 is pressed in the pipe radial direction RD and when the first water stop sheet 6 tries to deform outward in the pipe axial direction AD due to the pressure of the leakage, and can suppress deformation.

As illustrated in FIG. 10, both end parts 6c and 6d of the first water stop sheet 6 in the pipe circumferential direction CD are tapered. This allows the steps and gaps between the pipe and the first water stop sheet 6 to be reduced even after the first water stop sheet 6 is attached to the pipe, thereby reducing the exposure of the pipe except for the water leak portions. The first water stop sheet 6 has tapered ends 6c, 6d on both sides of the pipe circumferential direction CD and a middle portion 6f between the tapered ends 6c, 6d. A maximum thickness of the second water stop sheet 5 at the middle portion 6f is constant. A thickness of at least 5 mm from the inner peripheral surface of the second water stop sheet 5 to the inner peripheral surface of the first water stop sheet 6 in the middle portion 6f is preferred to achieve water stopping performance.

### Second water stop sheet 5

The second water stop sheet 5 is formed of an elastic body such as rubber. The rubber hardness of the second water stop sheet 5 is preferably 60 degrees or higher and 80 degrees or lower. As illustrated in FIGS. 2 and 3, the second water stop sheet 5 is provided on the inner peripheral surface 3a of each of the plurality of metal bands 3. In this embodiment, the second water stop sheet 5 is attached to the inner peripheral surface 3a of the metal band 3 via an adhesive (not shown).

As illustrated in FIG. 2, when the fastening mechanism 4 is fastened in a state where a plurality of metal bands 3 are connected in a ring shape, the second water stop sheet 5 is pressed against the outer peripheral surface K2 of the fluid pipe K. Therefore, since the second water stop sheet 5 seals the space between the metal band 3 and the outer peripheral surface K2 of the fluid pipe K, it is possible to stop the fluid pipe K from leaking even if a new water leak portion occurs in a location other than where the first water stop sheet 6 is placed. It is possible to prevent corrosion caused by contact of different metals by arranging the second water stop sheet 5 on the inner peripheral surface of the metal band 3. The plurality of second water stop sheets 5 are configured to cover the entire pipe circumferential direction CD.

As illustrated in FIG. 3, both pipe circumferential direction end parts 5c and 5d of the second water stop sheet 5 are tapered in shape. This allows two second water stop sheets 5 to be adjacent to each other in the pipe circumferential direction CD, and by overlapping the pipe circumferential direction end part 5d of one second water stop sheet 5 with the pipe circumferential direction end part 5c of the other second water stop sheet 5, the thickness of the second water stop sheet 5 is avoided to change like a step. As a result, the outer peripheral surface of the fluid pipe K can be pressed as uniformly as possible.

As illustrated in FIG. 3, the second metal plate 32 is positioned on the outer circumference of the second water stop sheet 5 (outside RD1 of the pipe radial direction). The second metal plate 32 is positioned between two metal bands 3 adjacent to each other in the pipe circumferential direction CD when fastening by the fastening mechanism 4. The second metal plate 32 is fitted into and bonded to a corresponding recess in the second water stop sheet 5. The second metal plate 32 is provided to hold the second water stop sheet 5 between the metal bands 3. The second metal plate 32 should overlap the line connecting the center of the fluid pipe K from the rotation axis 40. This allows the force tightened by the fastening mechanism 4 to be properly transmitted to the second water stop sheet 5, thereby improving the sealing effect.

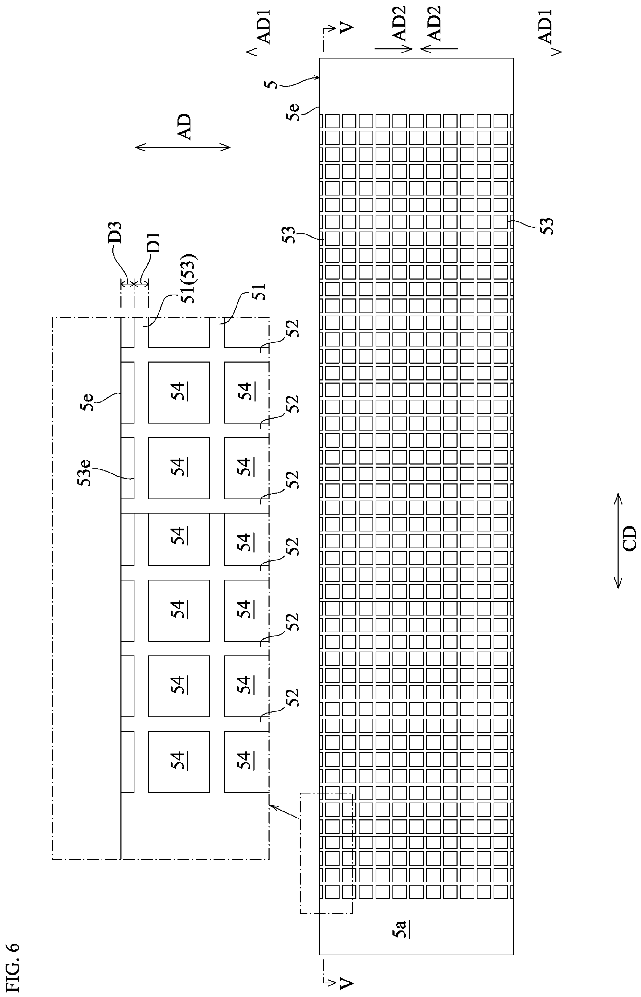

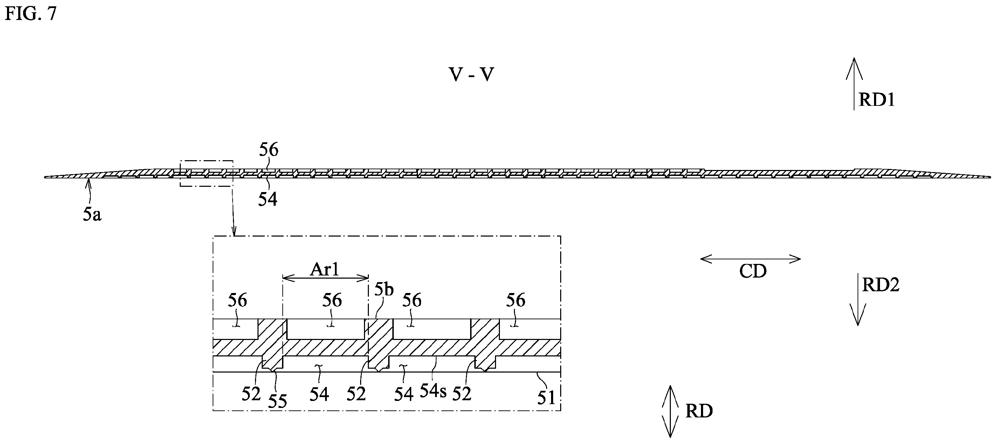

As illustrated in FIGS. 6 and 7, the inner peripheral surface 5a of the second water stop sheet 5 has a plurality of third ribs 51 extending in the pipe circumferential direction CD, a plurality of fourth ribs 52 extending in the pipe axial direction AD, and a plurality of third recesses 54. The third rib 51 and the fourth rib 52 protrude in the inner side RD2 in the pipe radial direction from the bottom 54s of the third recess 54. The third recess 54 is closed and formed by the plurality of third ribs 51 and the plurality of fourth ribs 52. The plurality of third ribs 51 and the plurality of fourth ribs 52 form a mesh. One cell constituting the mesh is one third recess 54. In this embodiment, the shape of the third recess 54 as viewed from the inner side RD2 of the pipe radial direction is rectangular (square), and when viewed in three dimensions, the third recess 54 is rectangular, but it is not limited to this. For example, it may be rhombic, circular or elliptical in shape.

As illustrated in FIGS. 6 and 7, the plurality of third ribs 51 includes an outermost rib 53 located at the outermost AD1 in the pipe axial direction. The outer end 53e of the outermost rib 53 in the pipe axial direction is located inside AD2 in the pipe axial direction than the outer end 3e of the metal band 3 in the pipe axial direction. In order to resist water pressure, the dimension D1 in the pipe axial direction of the third rib 51 and outermost rib 53 is preferably 1 mm or more. In this embodiment, D1 is 2.5 mm, but is not limited to this value.

Furthermore, to ensure that the deformed outermost rib 53 does not protrude beyond the second water stop sheet 5 when it attempts to deform outward AD1 in the pipe axial direction due to water pressure, it is preferable that the outer end 53e of the outermost rib 53 in the pipe axial direction be positioned inward AD2 in the pipe axial direction relative to the outer end 5e of the second water stop sheet 5 in the pipe axial direction.

As shown in FIG. 7, micro-protrusions 55 with a width and protrusion height of 0.75 mm or less are formed on the inner peripheral surfaces of the third rib 51 (including the outermost rib 53) and the fourth rib 52. However, the micro-protrusions 55 may be omitted. Alternatively, instead of the micro-protrusions 55, micro-recesses with a width and depth of 0.75 mm or less may be formed. The presence of either the micro-protrusions 55 or the micro-recesses enables the absorption of minute irregularities such as rust or corrosion that may form on the pipe surface.

As illustrated in FIG. 7, a fourth recess 56 corresponding to at least some of the plurality of third recesses 54 is formed in the outer peripheral surface 5b of the second water stop sheet 5. The fourth recess 56 is located only within the area Ar1 overlapping the third recess 54 when projected parallel to the pipe radial direction RD. If the fourth recess 56 is outside the above area Ar1, the foothold of the third rib 51 or the fourth rib 52 will be weaker and the third rib 51 or the fourth rib 52 will not be able to properly press down on the outer peripheral surface K2 of the fluid pipe K. The fourth recess 56 in this embodiment is circular when viewed in a direction parallel to the pipe radial direction RD and is cylindrical when viewed in three dimensions, but it is not limited to being circular. For example, the fourth recess 56 may be rectangular in shape like the third recess 54 when viewed in a direction parallel to the pipe radial direction RD.

As illustrated in FIG. 3, the second water stop sheet 5 has tapered ends 5c, 5d in the pipe circumferential direction and a middle portion 5f between the ends 5c, 5d in the pipe circumferential direction. The maximum thickness of the middle portion 5f of the second water stop sheet 5 is constant.

### Water leak repair method

The assembly process (water leak repair method) of the water leak repair fitting is briefly described.

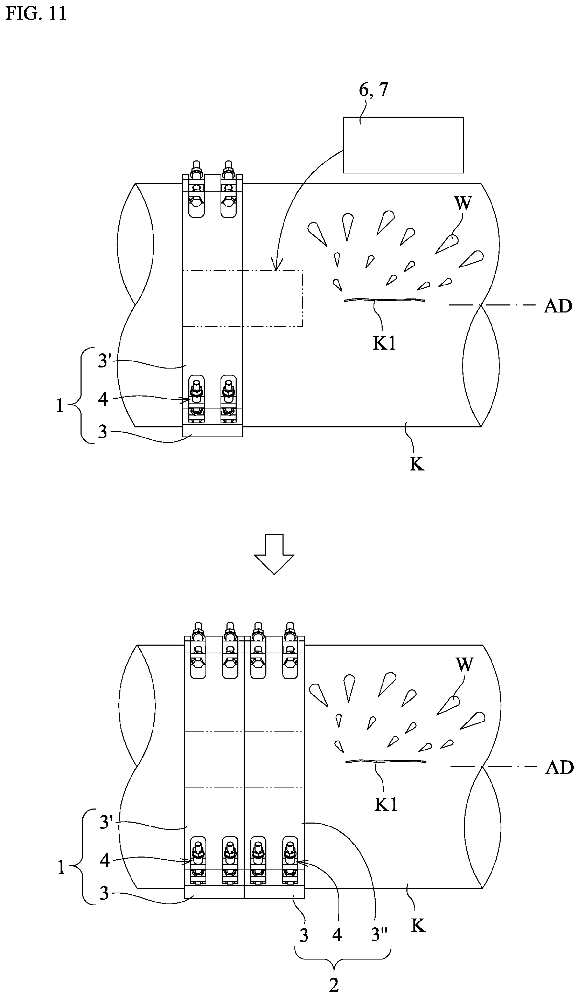

First, as illustrated in the upper part of FIG. 11, a plurality of metal bands 3 constituting unit 1 are placed at intervals in the pipe circumferential direction CD of the fluid pipe K in a situation where water leakage W is occurring from the water leak portion K1 of the fluid pipe K. The plurality of metal bands 3 constituting the first unit 1 are displaced from the leak portion K1 in the pipe axial direction AD so that the first unit is not subjected to the water pressure of the water jetting from the water leak portion K1.

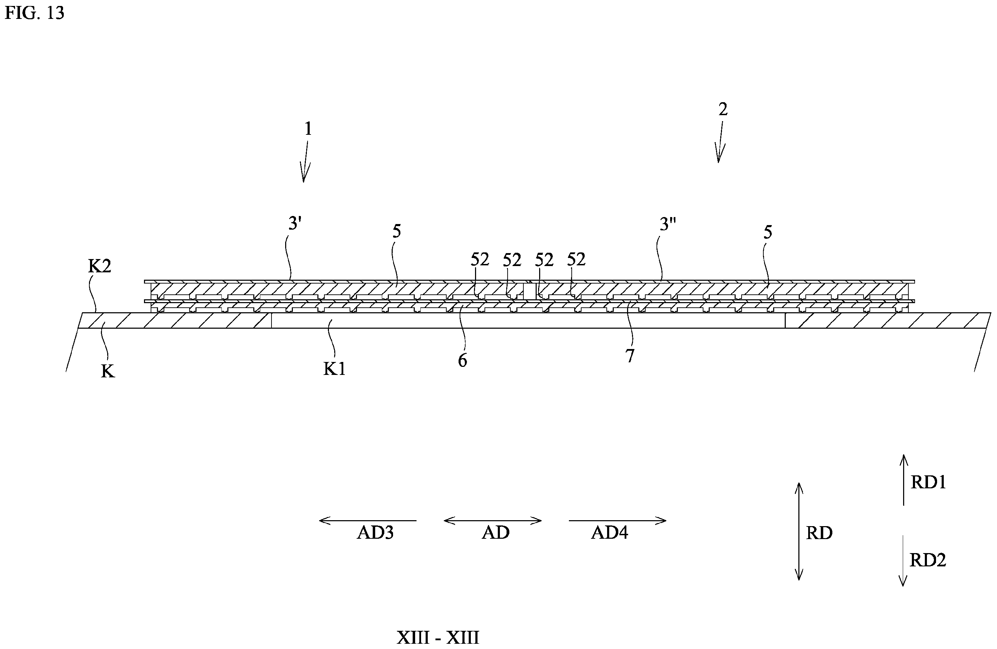

FIG. 13 is a cross-sectional view taken along line XIII- XIII in FIG. 1. As illustrated in FIG. 13, the water leak portion K1 due to a crack in fluid pipe K is stopped by the first water stop sheet 6. A first metal plate 7 is bonded to the outer peripheral surface of the first water stop sheet 6. The first metal band 3' constituting the first unit 1 and the second metal band 3" constituting the second unit 2 press the first metal plate 7 through the second water stop sheet 5. The first metal plate 7 presses the entire first water stop sheet 6 against the outer peripheral surface K2 of the fluid pipe K.

The first unit 1 is located on the first side AD3 in the pipe axial direction AD, and the second unit 2 is located on the second side AD4 in the pipe axial direction AD. The end of the first water stop sheet 6 on the first side AD3 of the pipe axial direction AD is located on the first side AD3 more than the fourth rib 52 on the most second side AD4 of the pipe axial direction AD in the second water stop sheet 5 of the first metal band 3'. The end of the first water stop sheet 6 on the second side AD4 of the pipe axial direction AD is located on the second side AD4 than the fourth rib 52 on the most first side AD3 of the pipe axial direction AD in the second water stop sheet 5 of the second metal band 3". This allows the first water stop sheet 6 to be properly pressed by the plurality of fourth ribs 52 in the second water stop sheet 5 of the first metal band 3' and the second metal band 3", respectively.

As illustrated in FIG. 13, a length in the pipe axial direction AD of the first water stop sheet 6 is larger than a width in the pipe axial direction AD of each of the first metal band 3' and the second metal band 3". It is possible to cope with a water leak portion K1 that is larger than a width of the pipe axial direction AD of the metal band 3. A length of the first water stop sheet 6 in the pipe axial direction AD should be a length corresponding to a multiple of the metal band 3. This enables improvement of appearance and workability. The water leak repair fitting of this form is suitable when the length of the water leak portion K1 in the pipe axial direction AD is larger than the width of the metal band 3 in the pipe axial direction AD.

### Second Embodiment

The water leak repair fitting of the second embodiment of the present invention is described. The difference of the second embodiment to the first embodiment is the second recess 66 in the first water stop sheet 6.

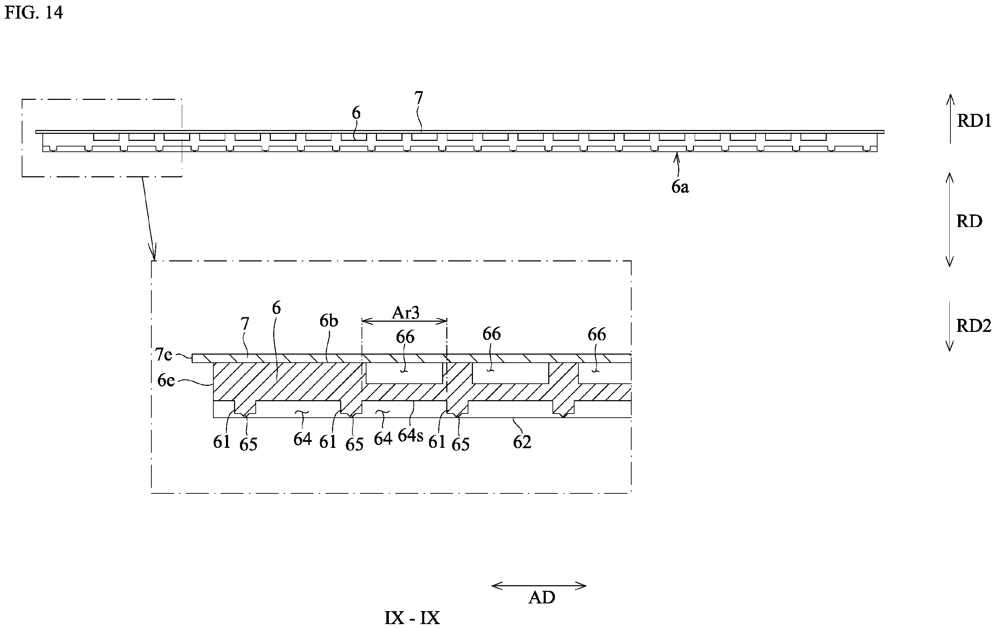

FIG. 14 is a diagram illustrating the first water-stopping sheet of the second embodiment and corresponding to FIG. 9. As illustrated in FIG. 14, the outer peripheral surface 6b of the first water stop sheet 6 has a second recess 66 corresponding to at least some of the plurality of first recesses 64. The second recess 66 is located only within the range Ar3 overlapping the first recess 64 when projected parallel to the pipe radial direction RD. If the second recess 66 is outside the above range Ar3, the foothold of the first rib 61 or the second rib 62 will be weaker, so that the first rib 61 or the second rib 62 will not be able to properly press the outer peripheral surface K2 of the fluid pipe K.

The second recess 66 of the second embodiment is circular when viewed in a direction parallel to the pipe radial direction RD and cylindrical when viewed in three dimensions, but it is not limited to being circular. For example, the second recess 66 may be short shaped like the first recess 64 when viewed in a direction parallel to the pipe radial direction RD. The second recess 66 of the second embodiment is smaller than the first recess 64 when viewed in a direction parallel to the pipe radial direction RD. This allows the pressing force of the outer peripheral surface K2 of the fluid pipe K by the first rib 61 or the second rib 62 to be increased.

Fastening mechanism 4 is fastened to reduce the diameter between the plurality of metal bands 3 and compress the first water stop sheet 6 against the outer peripheral surface K2 of the fluid pipe K. Water is an incompressible fluid, and when the respective first recess 64 is filled with water, the first rib 61 and the second rib 62 of the first water stop sheet 6 resist compression. Since the second recess 66 is on the outer circumference of the first recess 64 (outside the pipe radial direction RD1), when the first water stop sheet 6 is compressed, the portion of the first water stop sheet 6 between the first recess 64 and the second recess 66 deforms to the outer RD1 in the radial direction, allowing compression with a constant volume of the first recess 64, so that the first recess 64 is filled with water and This can make it easier to stop leakage even if the first recess 64 is filled with water.

In the natural state (non-compressed state) when no external force is acting on the first water stop sheet 6, the volume per first recess 64 is preferably greater than the volume change when one second recess 66 is compressed by 1 mm in the pipe radial direction RD. Even more preferably, the volume per second recess 66 should be greater than or equal to the volume change when one first recess 64 is compressed 1.5 mm in the pipe radial direction RD. The above volume change can be approximated by the bottom area of the first recess 64 x the amount of compression (1 mm to 1.5 mm).

### Third Embodiment

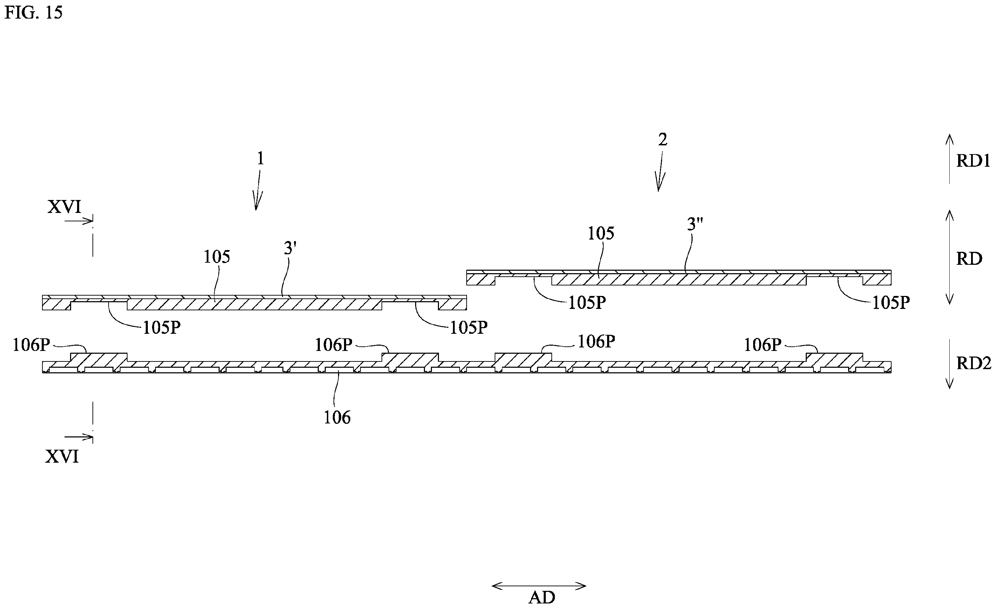

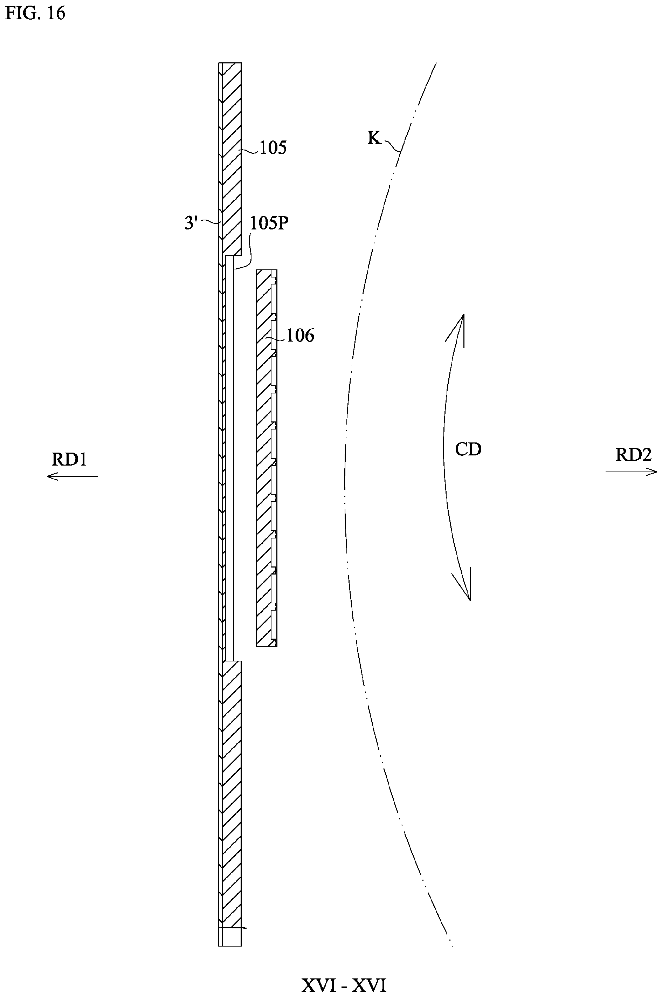

The third embodiment of the present invention, the water leak repair fitting, is described. FIG. 15 is a cross-sectional view along the pipe axial direction and pipe radial direction, illustrating the first water stop sheet and the second water stop sheet. FIG. 16 is a cross-sectional view taken along line XVI- XVI in FIG. 15.

The difference of the third embodiment from the first embodiment is that the first metal plate 7 bonded to the first water stop sheet 106 is eliminated and the first water stop sheet 106 and the second water stop sheet 105 have concavo-convex shapes that fit into each other.

As illustrated in Figures 15 and 16, a second water stop sheet 105 is bonded to the inner peripheral surface of the first metal band 3' constituting the first unit 1. The second water stop sheet 105 is adhered to the inner peripheral surface of the second metal band 3" constituting the second unit 2. The metal plate is not bonded to the outer peripheral surface of the first water stop sheet 106.

A first concavo-convex shape 106P is formed on the outer peripheral surface of the first water stop sheet 106. A second concavo-convex shape 105P is formed on the inner peripheral surface of the second water stop sheet 105. The first concavo-convex shape and the second concavo-convex shape can fit into each other. The first concavo-convex shape and the second concavo-convex shape fit into each other, thereby regulating the movement of the first water stop sheet 106 relative to the second water stop sheet 105 in the pipe axial direction AD.

In the third embodiment, the first concavo-convex shape 106P is a convex part extending parallel to the pipe circumferential direction CD and the second concavo-convex shape 105P is a recess extending in the pipe circumferential direction CD, but is not limited to this. For example, the first concavo-convex shape 106P may be a recess and the second concavo-convex shape 105P may be a convex. The second water stop sheet 105 has a recess that is larger than the dimension of the first water stop sheet 106 in the pipe circumferential direction CD and accommodates a portion of the first water stop sheet 6.

A second concavo-convex shape 105P is formed protruding from the bottom of this recess toward the first water stop sheet 106. The first concavo-convex shape 106P extends from one end of the first water stop sheet 106 in the pipe circumferential direction CD to the other end. This enables the deformation of a portion of the first water stop sheet 106 in the pipe axial direction AD to be suppressed. The thickness from the inner peripheral surface of the second water stop sheet 105 to the inner peripheral surface of the first water stop sheet 106 should be at least 3 mm in order to achieve water sealing performance.

### Fourth Embodiment

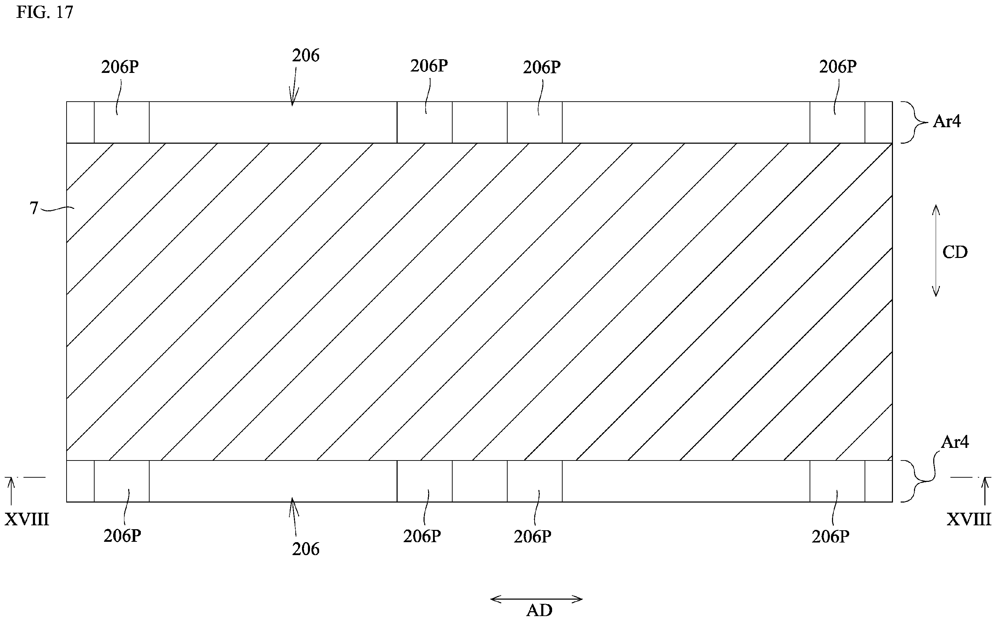

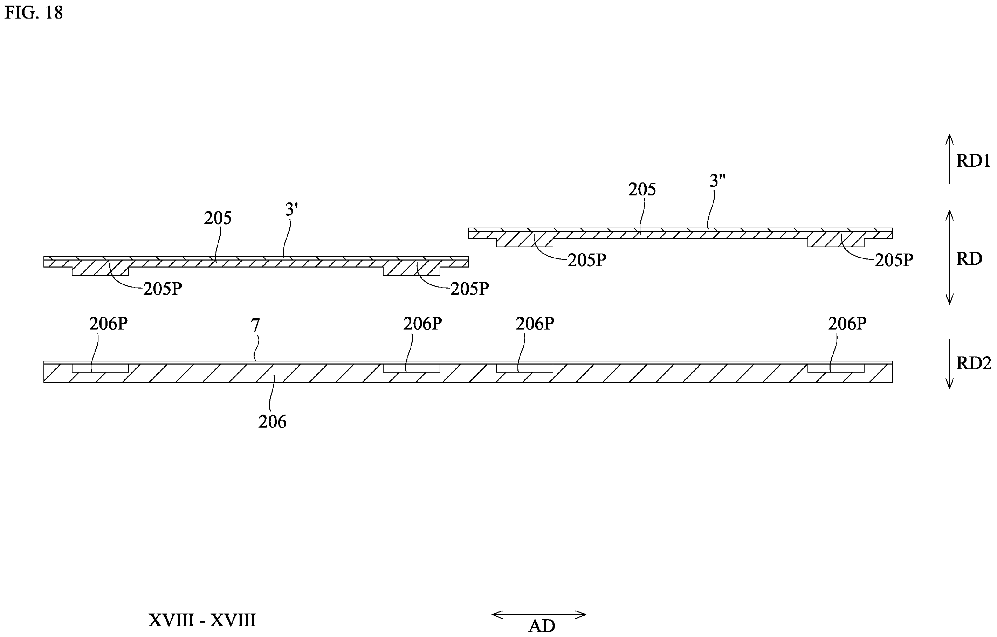

The fourth embodiment of the present invention, the water leak repair fitting, is described. FIG. 17 is a plan view of the first water stop sheet and the first metal plate bonded to the outer peripheral surface of the first water stop sheet when viewed in a direction parallel to the pipe radial direction. In FIG. 17, the first metal plate 7 is represented by hatching. FIG. 18 is a cross-sectional view taken along line XVIII-XVIII in FIG. 17.

As illustrated in Figures 17 and 18, a second water stop sheet 205 is bonded to the inner peripheral surface of the first metal band 3' constituting the first unit 1. The second water stop sheet 205 is adhered to the inner peripheral surface of the second metal band 3" constituting the second unit 2. A first metal plate 7 is bonded to the outer peripheral surface of the first water stop sheet 206. The first metal plate 7 bonded to the first water stop sheet 206 is not located on the entire outer peripheral surface of the first water stop sheet 206, but only on a portion of it. The first metal plate 7 is placed in the hatched area in FIG. 17.

As illustrated in FIG. 17, the first concavo-convex shape 206P is formed in the portion Ar4 of the outer peripheral surface of the first water stop sheet 206 where the first metal plate 7 is not placed. A second concavo-convex shape 105P is formed on the inner peripheral surface of the second water stop sheet 105. The first concavo-convex shape and the second concavo-convex shape can fit into each other. The first concavo-convex shape and the second concavo-convex shape fit into each other, thereby regulating the movement of the first water stop sheet 206 relative to the second water stop sheet 205 in the pipe axial direction AD.

The first concavo-convex shape 206P extends from one end to the other end of the pipe circumferential direction CD in the portion Ar4 of the outer peripheral surface of the first water stop sheet 206 where the first metal plate 7 is not provided. This makes it possible to suppress deformation of a portion of the first water stop sheet 206 in the pipe axial direction AD. The thickness from the inner peripheral surface of the second water stop sheet 205 to the inner peripheral surface of the first water stop sheet 206 should be at least 3 mm in order to achieve water stopping performance.

### Modification

(A) In the above embodiment, the first unit 1 and second unit 2 are placed in a position that is displaced from the water leak portion K1 in the pipe axial direction AD and does not cover the water leak portion K1, and then the first unit 1 and second unit 2 are moved in the pipe axial direction AD, but not limited to this, the first unit 1, second unit 2 and water stop sheet 1 6 may not be moved in the pipe axial direction AD. For example, the first water stop sheet 6 may be placed in a position to cover the water leak portion K1, the metal bands 3 of the first unit 1 and the second unit 2 may be placed to cover the first water stop sheet 6, the fastening mechanism 4 may be temporarily tightened, and the jig 8 may be used to tighten the first and second metal bands 3" and 3 " from both sides in the pipe axial direction AD, and the fastening mechanism 4 of each of the first unit 1 and the second unit 2 may be fastened in place with the jig 8 in a positioned position.

As another example, the metal band 3 constituting unit 1 may be placed at the position covering the water leak portion K1 and the fastening mechanism 4 may be temporarily tightened, the water stop sheet 6 may be placed between the metal band 3 of unit 1 and the fluid pipe K at the position covering the water leak portion K1, the water stop sheet 6 may be placed at the position covering the water stop sheet 6 of unit 1. The fastening mechanism 4 may be temporarily tightened by placing the metal band 3 comprising the first unit 1 and the metal band 3 comprising the second unit 2 at the position covering the first water stop sheet 6, and then the fastening mechanism 4 for each of the first unit 1 and the second unit 2 may be tightened for the final fastening.

In other words, the step of positioning the first metal band 3' and the second metal band 3' in a position to cover the first water stop sheet 6 may be performed, and then the fastening mechanism 4 of each of the first unit 1 and the second unit 2 is tightened. The steps of positioning and tightening the fastening mechanism 4 of each of the first unit 1 and the second unit 2 may be performed. The steps of temporarily tightening the fastening mechanism 4 of the first unit 1 and the second unit 2, placing the first unit 1, placing the second unit 2, and placing the first water stop sheet 6, which are executed before the above positioning step and the main tightening step, are in no particular order.

(B) In the above embodiment, the second water stop sheet 5 is provided on the inner peripheral surface of the metal band 3, but the second water stop sheet 5 can be omitted if the first water stop sheet 6 is to stop water leak portion K1.
(C) In the above embodiment, the first water stop sheet 6 is integrally formed by an elastic body such as rubber, but it is not limited to this. For example, a plurality of sheet members may be bonded together to constitute the first water stop sheet 6.
(D) In the first embodiment, the second water stop sheet 5 is fixed to the metal band 3 by adhesion, but it is not limited to this. The second water stop sheet 5 may not be fixed to the metal band 3.
(E) The annular portion 30 of metal band 3 is formed by bending and welding sheet metal, but may be formed in other ways.
(F) The welded tip 31 of the sheet metal may be positioned in an orientation where the welded tip 31 is RD1 outside the pipe radial direction.
(G) In the above embodiment, the first water stop sheet 6 has a first recess 64 and a second recess 66, and the second water stop sheet 5 has a third recess 54 and a fourth recess 56. These recesses may be omitted, although water sealing performance is reduced.
(H) In the third and fourth embodiments, the convex portions constituting the first concavo-convex shapes 106P, 206P and the second concavo-convex shapes 105P, 205P extend parallel to the pipe circumferential direction CD, but if the first water stop sheet 106 can be regulated to move in the pipe axial direction AD relative to the second water stop sheet 105, this It is not limited to this.
(I) The above embodiment describes as an example a water leak repair fitting method in a situation where a water leak W has occurred from a leak portion K1 of a fluid pipe K. However, "leak portion" is not limited to fitting a fitting in a situation where a water leak W has occurred. It also includes installing the fittings on a water leak portion (crack) where the fluid pipe K is disconnected after the leak and the leak is confirmed.

[1] As described above, but not limited to, as in the first, second, third, and fourth embodiments, a water leak repair fitting attached to a water leak portion K1 of a fluid pipe K, the water leak repair fitting comprising: a first unit 1 that has a plurality of metal bands 3 provided at intervals in a pipe circumferential direction CD of the fluid pipe K, and a fastening mechanism 4 that fastens end parts of the plurality of metal bands 3 in the pipe circumferential direction to each other; a second unit 2 is located adjacent to the first unit 1, and has a plurality of metal bands 3 provided at intervals in a pipe circumferential direction CD of the fluid pipe K, and a fastening mechanism 4 that fastens end parts of the plurality of metal bands 3 in the pipe circumferential direction to each other; and a first water stop sheet 6 formed of elastic body and extends from a first metal band 3' of the first unit 1 to a second metal band 3" of the second unit 2 in a pipe axial direction AD, wherein a length L2 of the first water stop sheet 6 in the pipe circumferential direction is smaller than a length L1 of the first metal band 3' and the second metal band 3" in the pipe circumferential direction, and the first water stop sheet 6 is pressed against an outer peripheral surface K2 of the fluid pipe K by the first metal band 3' and the second metal band 3".

According to this configuration, the first water stop sheet 6 can handle leaks from cracks extending in the pipe axial direction AD.

[2] The water leak repair fitting described in [1] above, wherein a second water stop sheet 5 may be provided on an inner peripheral surface of each of the plurality of metal bands 3 constituting the first unit 1 and the second unit 2.

According to this configuration, it is possible to stop the leakage of fluid pipe K even if a new water leak portion occurs outside of the area where the first water stop sheet 6 is placed. In addition, by placing the second water stop sheet 5 on the inner peripheral surface of the metal band 3, it is possible to prevent corrosion caused by contact with different metals.

[3] The water leak repair fitting described in [1] or [2] above, wherein a first metal plate 7 may be provided on an outer peripheral surface of the first water stop sheet 6.

According to this configuration, the first water stop sheet 6 is pressed against the first metal band 3' and the second metal band 3" to prevent the first water stop sheet 6 from escaping to outside AD1 in the pipe axial direction, thereby improving the water sealing performance. In addition, even if there is a gap between the first metal band 3' and the second metal band 3", the first metal plate 7 can cover the gap to improve the water sealing performance.

[4] The water leak repair fitting described in [3] above, wherein an inner peripheral surface of the first water stop sheet 6 may have a plurality of first recesses 64, the outer peripheral surface of the first water stop sheet 6 on which the first metal plate 7 is provided may have a second recess 66 corresponding to each of at least some of the plurality of first recesses 64, and the second recess 66 may be provided only within a range overlapping the first recess 64 when projected in parallel in a pipe radial direction RD.

According to this configuration, the second recess 66 formed in the outer peripheral surface of the first water stop sheet 6 is located only within the overlapping range Ar1 with the first recess 64, and the second recess 66 is not located in the overlapping position with the first rib 61 and the second rib 62, so that the first rib 61 and the second rib 62 press the outer peripheral surface K2 of the fluid pipe K properly This does not impair the water sealing effect of the first and second ribs. Furthermore, since the second recess 66 is located on the periphery of the first recess 64, it is possible to deform the portion of the first water stop sheet 6 between the first recess 64 and the second recess 66 to the outside RD1 in the pipe radial direction even when the first recess 64 is filled with water leakage. This deformation enables the first water stop sheet 6 to be compressed even when the inside of the first recess 64 is filled with water, thereby avoiding compression inhibition due to water leakage and enabling the first water stop sheet 6 to be properly compressed and sealed.

[5] The water leak repair fitting described in any of [1] to [4] above, wherein the first metal band 3' and the second metal band 3" may have an indication 33 designating a position at which the first water stop sheet 6 is to be disposed.

According to this configuration, the first water stop sheet 6 can be installed in a properly compressible state, regardless of the installer. Also, the position of the first water stop sheet 6 can be visually confirmed even after installation.

[6] The water leak repair fitting described in [2] above, wherein a first concavo-convex shape 106P may be formed on an outer peripheral surface of the first water stop sheet 106, a second concavo-convex shape 105P may be formed on an inner peripheral surface of the second water stop sheet 105, and the first concavo-convex shape 106P and the second concavo-convex shape 105P may fit into each other.

According to this configuration, the first water stop sheet 106 to avoid escaping outward in the pipe axial direction AD, thereby improving water sealing performance.

[7] The water leak repair fitting described in [6] above, wherein the first concavo-convex shape 106P extends from an end of the first water stop sheet in the pipe circumferential direction to another end of the first water stop sheet 106.

According to this configuration, it is possible to precisely prevent the first water stop sheet 106 from shifting in the pipe axial direction AD and leaking water.

[8] The water leak repair fitting described in [6] above, wherein a first metal plate 7 may be provided on a portion of the outer peripheral surface of the first water stop sheet 206, and the first concavo-convex shape 206P may extend from an end in the pipe circumferential direction CD to another end at a portion Ar4 of the outer peripheral surface of the first water stop sheet 206 where the first metal plate 7 is not provided.

According to this configuration, it is possible to precisely prevent the first water stop sheet 106 from shifting in the pipe axial direction AD and leaking water.

[9] The water leak repair fitting described in any of [1] to [8] above, wherein a length in the pipe axial direction AD of the first water stop sheet 6 is greater than a width in the pipe axial direction AD of each of the first metal band 3' and the second metal band 3".

According to this configuration, it possible to accommodate a water leak portion K1 larger than the width of the pipe axial direction AD of the metal band 3.

[10] But not limited to, as in above embodiment, a water leak repair method comprising: arranging a plurality of metal bands 3 constituting a first unit 1 at intervals in a pipe circumferential direction CD of the fluid pipe K, and temporarily fastening end parts of the plurality of metal bands 3 constituting the first unit 1 in the pipe circumferential direction to each other by a fastening mechanism 4; arranging a plurality of metal bands 3 constituting a second unit 2 at intervals in a pipe circumferential direction of the fluid pipe K, and temporarily fastening end parts of the plurality of metal bands 3 constituting the second unit 2 in the pipe circumferential direction to each other by a fastening mechanism 4; positioning the first metal band 3' and the second metal band 3" in a position to cover a first water stop sheet 6, wherein the first water stop sheet 6 is formed of an elastic body and is for covering the water leak portion K1, the first metal band 3' is included in the first unit 1, the second metal band 3" is included in the second unit 2; tightening the fastening mechanism 4 of each of the first unit 1 and the second unit 2.

[11] The water leak repair method described in [10] above, wherein the positioning is performed using a jig 8 that clamps the first metal band 3' and the second metal band 3" from both sides in the pipe axial direction AD, and the tightening is performed while maintaining the positioning by the jig 8.

It is possible to properly fit water leak repair fittings.

The water leak repair fitting described in any of [1] to [9] above, wherein the portion of the first metal band 3' and the second metal band 3" that presses against the first water stop sheet 6 may be a plate-shaped portion of constant thickness, and the plate-shaped portion enables the first metal band 3' and the second metal band 3" can be bent along the outer peripheral surface K2 of the fluid pipe K.

While embodiments in accordance with the present invention have been described above with reference to the drawings, it should be understood that the specific constitution thereof is not limited to these embodiments. The scope of the present invention is as indicated by the claims and not merely as described at the foregoing embodiments, and moreover includes all variations within the scope of or equivalent in meaning to that which is recited in the claims.

Structure employed at any of the foregoing embodiment(s) may be employed as desired at any other embodiment(s). The specific constitution of the various components is not limited only to the foregoing embodiment(s) but admits of any number of variations without departing from the gist of the present invention.

### DESCRIPTION OF REFERENCE SIGNS

- 1: First unit
- 2: Second unit
- 3: Metal band
- 3': First metal band
- 3": Second metal band
- 4: Fastening mechanism
- 5: Second water stop sheet
- 6: First water stop sheet
- 8: Jig
- 33: Indication
- 64: First recess
- 66: Second recess
- 105, 205: Second water stop sheet
- 105P, 205P: Second concavo-convex shape
- 106, 206: First water stop sheet
- 106P, 206P: First concavo-convex shape
- AD: Pipe axial direction
- CD: Pipe circumferential direction
- K: Fluid pipe
- K1: Water leak portion
- K2: Outer peripheral surface
- RD: Pipe radial direction
- W: Water leak

## Claims

1. A water leak repair fitting attached to a water leak portion of a fluid pipe, the water leak repair fitting comprising:
a first unit that has a plurality of metal bands provided at intervals in a pipe circumferential direction of the fluid pipe, and a fastening mechanism that fastens end parts of the plurality of metal bands in the pipe circumferential direction to each other;
a second unit is located adjacent to the first unit, and has a plurality of metal bands provided at intervals in a pipe circumferential direction of the fluid pipe, and a fastening mechanism that fastens end parts of the plurality of metal bands in the pipe circumferential direction to each other; and
a first water stop sheet formed of elastic body and extends from a first metal band of the first unit to a second metal band of the second unit in a pipe axial direction, wherein
a length of the first water stop sheet in the pipe circumferential direction is smaller than a length of the first metal band and the second metal band in the pipe circumferential direction, and
the first water stop sheet is pressed against an outer peripheral surface of the fluid pipe by the first metal band and the second metal band.

2. The water leak repair fitting according to claim 1,
wherein a second water stop sheet is provided on an inner peripheral surface of each of the plurality of metal bands constituting the first unit and the second unit.

3. The water leak repair fitting according to claims 1 or 2,
wherein a metal plate is provided on an outer peripheral surface of the first water stop sheet.

4. The water leak repair fitting according to claim 3,
wherein an inner peripheral surface of the first water stop sheet has a plurality of first recesses,
the outer peripheral surface of the first water stop sheet on which the metal plate is provided has a second recess corresponding to each of at least some of the plurality of first recesses, and
the second recess is provided only within a range overlapping the first recess when projected in parallel in a pipe radial direction.

5. The water leak repair fitting according to claim 1,
wherein the first metal band and the second metal band have an indication designating a position at which the first water stop sheet is to be disposed.

6. The water leak repair fitting according to claim 2,
wherein a first concavo-convex shape is formed on an outer peripheral surface of the first water stop sheet,
a second concavo-convex shape is formed on an inner peripheral surface of the second water stop sheet, and
the first concavo-convex shape and the second concavo-convex shape fit into each other.

7. The water leak repair fitting according to claim 6,
wherein the first concavo-convex shape extends from an end of the first water stop sheet in the pipe circumferential direction to another end of the first water stop sheet.

8. The water leak repair fitting according to claim 6,
wherein a metal plate is provided on a portion of the outer peripheral surface of the first water stop sheet, and
the first concavo-convex shape extends from an end in the pipe circumferential direction to another end at a portion of the outer peripheral surface of the first water stop sheet where the metal plate is not provided.

9. The water leak repair fitting according to claim 1,
wherein a length in the pipe axial direction of the first water stop sheet is greater than a width in the pipe axial direction of each of the first metal band and the second metal band.

10. A water leak repair method of repairing a water leak portion of a fluid pipe, the method comprising:
arranging a plurality of metal bands constituting a first unit at intervals in a pipe circumferential direction of the fluid pipe, and temporarily fastening end parts of the plurality of metal bands constituting the first unit in the pipe circumferential direction to each other by a fastening mechanism;
arranging a plurality of metal bands constituting a second unit at intervals in a pipe circumferential direction of the fluid pipe, and temporarily fastening end parts of the plurality of metal bands constituting the second unit in the pipe circumferential direction to each other by a fastening mechanism;
positioning the first metal band and the second metal band in a position to cover a first water stop sheet, wherein the first water stop sheet is formed of an elastic body and is for covering the water leak portion, the first metal band is included in the first unit, the second metal band is included in the second unit;
tightening the fastening mechanism of each of the first unit and the second unit.

11. The water leak repair method according to claim 10,
wherein the positioning is performed using a jig that clamps the first metal band and the second metal band from both sides in the pipe axial direction, and
the tightening is performed while maintaining the positioning by the jig.
